# EUROPEAN PATENT SPECIFICATION

(11) **EP 4 276 274 B1**
(45) Date of publication and mention of the grant of the patent: **02.07.2025**
(21) Application number: 22173328.0
(22) Date of filing: 13.05.2022
(51) Int. Cl.: E21B 41/00, B65G 5/00, F24T 10/30, E21B 43/16

(54) **SYSTEM AND METHOD FOR CONTROLLING CARBON SEQUESTRATION**
SYSTEM UND VERFAHREN ZUR STEUERUNG VON KOHLENSTOFFSEQUESTRIERUNG
SYSTÈME ET PROCÉDÉ DE CONTRÔLE DE SÉQUESTRATION DE CARBONE

(43) Date of publication of application: 15.11.2023
(73) Proprietor: ABB SCHWEIZ AG, 5400 Baden (CH)
(72) Inventor: HOLDEN, Ian, Welwyn, AL6 0QQ (GB); MARTINI, Riccardo, 16137 Genova (IT)
(74) Representative: Maiwald GmbH

(56) References cited:
- US-A1- 2003 168 211
- GESSER RODRIGO S ET AL: "Advanced control applied to a gas compression system of an offshore platform: From modeling to related system infrastructure", JOURNAL OF PETROLEUM SCIENCE AND ENGINEERING, ELSEVIER, AMSTERDAM, NL, vol. 208, 28 August 2021 (2021-08-28), XP086884577, ISSN: 0920-4105, [retrieved on 20210828], DOI: 10.1016/J.PETROL.2021.109428
- BELFROID S P C: "Porthos - CO2 injection", 30 September 2020 (2020-09-30), XP055974506, Retrieved from the Internet <URL:https://www.commissiemer.nl/projectdocumenten/00007542.pdf> [retrieved on 20221025]

## Description

### Field of the invention

The present disclosure relates to a system and a method for controlling carbon sequestration.

### Technical background

In carbon sequestration, the number of process fluid emitters, in particular CO2 emitters, will vary from project to project. The rate of process fluid generation will vary per emitter, typically dependent on factors including time of day, season and product demand. The quantity of emitters may vary over the lifetime of a carbon capture utilisation and storage, CCUS, facility. CCUS operators need to store the CO2 utilizing the least and lowest cost energy.

GESSER RODRIGO S ET AL: "Advanced control applied to a gas compression system of an offshore platform: From modelling to related system infrastructure" describes the development of an advanced control strategy using Model Predictive Control for controlling the gas compression system of an offshore platform.

US 2003/168211 A1 describes a method for increasing and extending oil production from underground formations nearly depleted of natural gas drive.

Belfroid S P C "Porthos - CO2 injection" describes a flow assurance analysis of the first elements of an offshore CO2 transport and storage network.

Thus, there is a need for an improved carbon sequestration in view of safety and costs.

### Summary

The present invention is defined by subject-matter of the independent claims. Additional features of the invention are presented in the dependent claims.

According to a first aspect of the invention, a system for controlling carbon sequestration comprises: At least one emitter, being configured to output a process fluid comprising carbon dioxide that is to be sequestrated. At least one reservoir, being connected over a pipeline with the at least one emitter and being configured to receive and store the process fluid. At least one compressor unit, being disposed at the pipeline between the at least one emitter and the at least one reservoir and being configured to control a downstream pressure of the process fluid. At least one valve, being disposed at the pipeline between the at least one emitter and the at least one reservoir and being configured to control a flow of the process fluid from the at least one emitter to the at least one reservoir. An optimizer unit, being configured to determine emitter output data by continuously logging emitter output levels of the process fluid of the of at least one emitter, wherein the emitter output levels relate to an amount of process fluid. The optimizer unit is configured to determine future emitter output data using the determined emitter output data, wherein the future emitter output data relate to a prediction of emitter outputs in a predetermined time window. The optimizer unit is configured to determine optimized control set-points for controlling the transport of the process fluid using the determined future emitter output data. The optimized control set-points comprise compressor unit set-points and valve set-points, wherein the compressor unit set-points are used for controlling the at least one compressor unit, wherein the valve set-points are used for controlling the at least one valve.

In other words, the optimizer unit is configured to evaluate control set-points, or in other words different valve values and compressor values in view of the predicted future emitter output data and finds optimal control set-points, in particular in view of security and costs. In other words, the optimizer units provides a relationship between different combinations of control set-points in a scenario of the future emitter output data to be sequestrated and costs within received boundaries. This allows the optimizer unit to find the most optimal control-points with the lowest costs for sequestration that also maintain the system within received or predetermined boundaries.

Preferably, the at least one reservoir relates to any storage geological formation that is suitable for permanently storing the process fluid, in particular CO2. Furthermore, the at least one reservoir comprises an aquifer. In particular, each reservoir is accessed by the pipeline via a valve that allows to regulate the flow of the process fluid into the reservoir. Further preferably, each reservoir is accessed by at least one well that connects the pipeline with the reservoir. In this case, each of the at least one wells comprise a valve that allows to regulate the flow of the process fluid into the well and as such into the reservoir.

Preferably, the optimizer unit comprises a pipeline model, wherein the pipeline model relates to a virtual representation of the pipelines. Further preferably, the optimizer unit uses the pipelines model to determine the optimized control set-points. In other words, the optimizer unit uses the information that the pipeline model provides to evaluate how process parameters of the process fluid would most likely behave depending on different control set-points and the determined future emitter output data.

Preferably, the optimizer-unit is implemented in software.

The optimized set-points are either provided to an operator as recommend operational set-points or are automatically applied to a control system, in particular a level 2 control system for automatic optimization of the sequestration.

Furthermore, the pipeline model comprises pipeline integrity data relating to an integrity of the pipeline. In other words, if the integrity of a pipeline, in particular of a branch of the pipeline, falls under a predetermined threshold, this path is temporary omitted during fluid sequestration. For example, due to over pressure in the pipeline, the pipeline integrity falls under the predetermined threshold. Thus, this pipeline is no longer used for fluid sequestration, even when it means that a subsequent reservoir cannot be used for fluid sequestration.

Consequently, an improved system for controlling fluid sequestration is provided. In other words, the system allows dynamic operational and maintenance planning. Furthermore, the system can perform the fluid sequestration in light of costs, in particular energy costs. Thus, the system allows to provide a process fluid sequestration with maximization of storage capacity of the reservoir and minimization of costs, in particular energy costs.

In a preferred embodiment, the system comprises at least one process parameter sensor, configured to determine process parameters of the process fluid. The optimizer unit is configured to determining future process parameters using the determined future emitter output data and the determined process parameters, wherein the future process parameters relate to prediction of the process parameters in a predetermined time window. The optimizer unit is configured to determine the optimized control set-points using the determined future process parameters.

In other words, based on the future emitter output data, the optimizer unit is aware of the amount of process fluid that needs to be sequestrated in a given future time window. Using this information, the optimizer unit is configured to determine how the process parameters will change when sequestrating the process fluid in accordance with the future emitter output data depending on the optimized control set-points. Thus, the optimizer unit is configured to determine optimized control set-points that lead to process parameters with the lowest costs. In particular, control set-points that lead to a relatively high pressure of the process fluid, usually lead to relatively high costs, as high pressure during sequestration leads to a high energy consumption of the at least one compressor unit.

The optimizer preferably comprises a process model that is configured to determine the future process parameters. For example, the optimizer unit allows to minimize compressor energy usage by trimming compressor power while keeping valve opening for each well/reservoir below an operator-defined limit. The energy minimization will be performed while honouring valve position constraints so to make sure local pressure control ability is maintained while minimizing the overall energy consumption. The process model preferably comprises a machine learning model.

Preferably, the system comprises a process accumulation infrastructure that provides intermediate storage capacity of the process fluid. The optimizer unit determines the optimized control set-points using the process accumulation infrastructure. In other words the optimizer unit utilises this intermediate storage capacity to influence operational decisions.

This allows a sequestration of the process fluid that can be optimized in view of a predicted amount of process fluid to be sequestrated and in view of predicted process parameters that the sequestration will lead to.

In a preferred embodiment, the process parameters comprise a fluid pressure, a fluid temperature, a composition and/or a fluid flow.

In a preferred embodiment, the optimizer unit is configured receive phase change margins of the process fluid, relating to physical boundaries of the process parameters of the process fluid in view of a change of physical state of the process fluid. The optimizer unit is configured to determined the optimized control set-points using the received phase change margins.

Preferably, the process fluid, in particular comprising CO2, might have different physical states depending on temperature and pressure of the process fluid. In general, during transport of the process fluid, or in other words during sequestration of the process fluid, no change of physical state of the process fluid should occur. Consequently, depending on provided phase change margins of the process fluid, and the future process parameters of the process fluid, the optimizer unit can determined optimized control set-points that allow a sequestration without a change of physical state of the process fluid.

Process fluid emissions and storage are always balanced to keep pressure in the desired range along the pipeline, especially for gas phase cases of the process fluid due to the need to control gas packing phenomena. In general, the optimizer unit estimates pressure, temperature and composition of the process gas along the pipeline to calculate the margin from phase change.

In other words, a change of physical state of the process fluid during sequestration would most likely lead to relatively high costs and raises security problems. Consequently, the optimizer unit is configured to determine optimized control set-points that lead to a stable physical state of the process fluid.

In a preferred embodiment, the at least one process parameter sensor is disposed on the at least one compressor unit and/or the at least one reservoir.

In a preferred embodiment, the optimizer unit is configured to receive scenario data, relating to general information about the carbon sequestration. The optimizer unit is configured to determine the future emitter output data using the scenario data. Preferably, the scenario data, as used herein, comprise a time of day, a season and/or a product demand. Those factors relate to the amount of emitting process fluid. For example, during the day, generally, more process fluid is emitted that needs to be sequestrated compared to night time.

The system according to the first aspect of the invention further comprises a reservoir model unit, being configured to provide a reservoir model of the at least one reservoir and being configured to determine reservoir data using the reservoir model and the determined future emitter output data, wherein the reservoir data relates to properties of the at least one reservoir when receiving process fluid according to the future emitter output data. The optimizer unit is configured to determine the optimized control set-points using the determined reservoir data.

The reservoir model preferably comprises a virtual representation of the at least one reservoir. The reservoir data provided by the reservoir model for example comprise a reservoir life or a maximum or present storage capacity. For example, the amount of pressure needed to store the process fluid into the reservoir relates to a filling level of the reservoir. In other words, a high filling level of the reservoir relates to a higher pressure needed to fill the reservoir with additional process fluid. Higher pressure of the process fluid directly leads to higher costs of the sequestration.

Furthermore, the reservoir data comprises reservoir integrity data, relating to an integrity of the reservoir. In other words, the optimized set-points can be determined in view of the integrity of the available reservoirs. For example, if an integrity of one reservoir falls under a predetermined threshold, in fluid sequestration, this reservoir is temporary omitted.

The reservoir model is preferably configured to determine the reservoir data using the determined future process parameters. In other words, the reservoir model predicts the properties of the at least one reservoir based on the expected emitter output of the emitters and the expected process parameters of specific transportation scenarios.

Consequently, information about the reservoir can be used by the optimizer unit to find the optimized control set-points for sequestration.

In a preferred embodiment, the system comprises a plurality of compressor units, wherein the optimizer unit is configured to balance a workload of the plurality of compressor units between each other when determining the optimized control set-points.

Balancing the workload of the plurality of compressor units directly leads to a reduction of maximum pressure of the process fluid. This directly leads to reduced costs of sequestration.

Consequently, the optimizer units can provide better optimized control set-points by balancing the compressor set-points.

In a preferred embodiment, the system comprises a plurality of reservoirs, wherein the optimizer unit is configured to balance a receiving load of the process fluid between the plurality of reservoirs when determining the optimized control set-points.

As already described, less energy is needed to fill a reservoir that is less filled than an almost full reservoir. Considering the filling level of the reservoir and balancing the receiving load of the process fluid between the available reservoirs allows for improved optimized set-points.

Consequently, the optimizer units can provide better optimized control set-points by balancing the valve set-points.

In a preferred embodiment, the at least on reservoir comprises at a plurality of injection wells that are used to inject the process fluid from the at least one emitter into the at least one reservoir, wherein the optimizer unit is configured to balance a receiving load of the process fluid between the plurality of injection wells when determining the optimized control set-points.

Thus, a wellhead pressure, relating to a pressure in a head of the well, can be controlled.

In a preferred embodiment, the optimizer unit is configured to receive energy cost data; and wherein the optimizer unit is configured to determine the optimized control set-points using the received energy cost data.

In other words, the optimizer unit is provided with current energy prices and/or future price estimations. Consequently, the optimizer unit can allocate the process fluid on wells while balancing reservoir utilization over a selectable time horizon, like a week, in view of the energy costs. The optimizer for example favours a use of less energy consuming wells and/or reservoirs, considering backpressure and distance of the pipeline, when energy prices are high and use wells and/or reservoirs that cause higher energy consumption when prices are low, therefore minimizing energy costs.

In a preferred embodiment, the optimizer unit is configured to receive safety parameters; and wherein the optimizer unit is configured to determine the optimized control set-points using the received safety parameters.

In other words, safety parameters for all transportation, compression facilities, wells and reservoirs are boundary conditions within the optimisation of the optimizer unit.

Thus, the system allows to provide a process fluid sequestration with improved safety, in particular in combination with maximization of storage capacity of the reservoir and minimization of costs.

In a preferred embodiment, the system comprises a temperature regulating device, which is configured to externally regulate a temperature of the process fluid. The optimizer unit is configured to determine a temperature control signal when determining the optimized control set-points. The temperature regulating device is configured to regulate the temperature of the process fluid using the temperature control signal.

In a preferred embodiment, the optimizer unit comprises a machine learning unit.

Preferably, the optimizer uses Physical Modelling, Advanced Process Control, Model Predictive Control and/or Artificial Intelligence including Machine Learning.

According to a second aspect of the invention, a method for controlling process fluid sequestration comprises the steps: Outputting, by at least one emitter, a process fluid that is to be captured. Receiving and storing, by at least one reservoir, being connected over a pipeline with the at least one emitter, the process fluid. Controlling, by at least one compressor unit, being disposed at the pipeline between the at least one emitter and the at least one reservoir, a downstream pressure of the process fluid. Controlling, by at least one valve, being disposed at the pipeline between the at least one emitter and the at least one reservoir, a flow of the process fluid from the at least one emitter to the at least one reservoir. Determining, by an optimizer unit, emitter output data by continuously logging emitter output levels of the of at least one emitter, wherein the emitter output levels relate to an amount of process fluid. Determining, by the optimizer unit, future emitter output data using the determined emitter output data, wherein the future emitter output data relate to a prediction of emitter outputs in a predetermined time window. Determining, by the optimizer unit, optimized control set-points for controlling the transport of the process fluid using the determined future emitter output data. The optimized control set-points comprise compressor unit set-points and valve set-points, wherein the compressor unit set-points are used for controlling the at least one compressor unit, wherein the valve set-points are used for controlling the at least one valve, characterized by providing, by a reservoir model unit, a reservoir model of the at least one reservoir and determining, by the reservoir model unit, reservoir data using the reservoir model and the determined future emitter output data, wherein the reservoir data relates to properties of the at least one reservoir when receiving the process fluid according to the future emitter output data; wherein determining, by the optimizer unit, optimized control set-points comprises using the determined reservoir data.

### Brief description of the drawings

Exemplary embodiments of the invention will be described in the following with reference to the accompanying drawings:
- Fig.1: shows a schematic view of a system for controlling carbon sequestration;
- Fig.2: shows a schematic view of an optimizer unit; and
- Fig.3: shows a schematic view of a method for controlling carbon sequestration.

The reference symbols used in the drawings, and their meanings, are listed in summary form in the list of reference symbols. In principle, identical assembly parts are provided with the same reference symbols in the figures.

Preferably, the functional modules and/or the configuration mechanisms are implemented as programmed software modules or procedures, respectively; however, one skilled in the art will understand that the functional modules and/or the configuration mechanisms can be implemented fully or assembly partially in hardware.

### Detailed description of exemplary embodiments

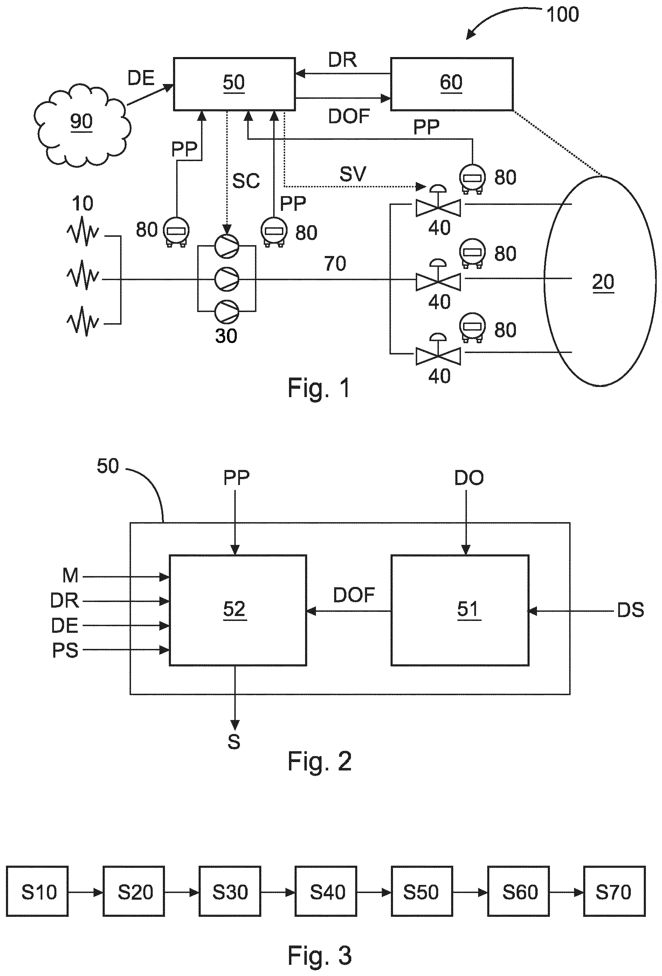

Fig.1 shows a schematic view of a system 100 for controlling carbon sequestration.

The system 100 comprises a at least one emitter 10, at least one reservoir 20, at least one compressor unit 30, at least one valve 40. In this case, the system 100 comprises a plurality, for example three, emitters 10 that are configured to output a process fluid 11 comprising carbon dioxide. The system 100 is configured to sequestrate the process fluid 11 from the emitters 10 to the reservoir 20 that is configured to receive and store the process fluid 11. The reservoir 20 is connected to the emitters 10 via a pipeline 70, in particular a pipeline system that comprises a plurality of branches of pipelines. Between the emitters 10 and the reservoir 20, a plurality of compressor units 30, for example three, are disposed at the pipeline 70. The compressor units 30 apply pressure to the process fluid 11 in the pipeline 70 for transporting the process fluid 11 through the pipeline 70. For example, each branch of pipeline in the pipeline 70 is supplied with a compressor unit 30. The reservoir 20 is accessed by the pipeline 70 over a plurality of wells, which each comprise a valve 40. The valve 40 is configured to control a flow of the process fluid 11 in the pipeline 70 and especially into the well that leads into the reservoir 20.

The carbon sequestration, or in other words the sequestration of the process fluid 11, is controlled by an optimizer unit 50, which is part of the system 100. The optimizer unit 50 is preferably implemented as a software module. In order to control the sequestration of the process fluid 11, the optimizer unit 50 provides optimized control set-points S. The optimized control set-points comprise set-points, or in other words control settings, for the compressor units 30 and the valves 40. As such, the optimizer unit 50 is configured to control the pressure and the flow of the process fluid 11 in the pipeline 70 and furthermore, the optimizer unit 50 is configured to define different paths of the process fluid 11 through the pipeline 70 from the emitters 10 to the reservoir 20 and the amount of process fluid 11 that flows through which path of the pipeline 70. The optimized control set-points S are control set-points S that are optimized by the optimizer unit 50 in particular in view of general transportation cost, energy consumption of the sequestration and maximization of the storage capacity of the reservoir 20 and/or the wells. The optimized control set-points S comprise compressor unit set-points SC that are used for controlling the compressor units 30 and valve set-points SV that are used for controlling the valves 40.

The optimizer unit 50 is configured to continuously monitor, or in other words log, emitter output levels of the process fluid 11 from the emitters 10. In other words, the optimizer unit 50 is configured to monitor the amount of process fluid 11 that is emitted by the emitters 10, in particular over a predetermined time window. Based on the monitoring, the optimizer unit 50 determines emitter output data DO that relate to the emitted process fluid 11. The optimizer unit 50 is further configured to determine future emitter output data DOF using the determined emitter output data DO. In other words, the optimizer unit 50 is configured to predict emitter output levels that will be outputted by the emitters, in particular in a predetermined time window. The optimizer unit 50 might therefore also include scenario data Ds that are supplied to the optimizer unit 50 and comprise general information about the carbon sequestration. In particular, the time and date of the carbon sequestration play a major factor in the prediction of the future emitter output data DOF. Using the determined future emitter output data DOF, the optimizer unit 50 determined the optimized control set-points S, and thus provides an improved carbon sequestration.

Preferably, the optimizer unit 50 comprises a process model, that in particular is a machine learning model. The process model provides a model of the transportation process of the process fluid 11 from the emitters 10 to the reservoir 20. The process model is configured to provide a prediction of the transportation of the process fluid 11 that is used by the optimizer unit 50 to determined the optimized control set-points.

The system 100 comprises a plurality of process parameter sensors 80 that re configured to determined process parameters PP of the process fluid 11. The process parameters sensors 80 are in particular disposed near the compressor unit 30 and the valves 40. However, the process parameter sensors 80 are disposed along the pipeline 70 wherever the information of the process parameters PP is useful or necessary. The process parameters 70 comprise a fluid pressure, a fluid temperature, a fluid composition and/or a fluid flow of the process fluid 70. The process parameters PP are provided to the optimizer unit 50. The optimizer unit 50 is configured to determine future process parameters using the determined future emitter output data DOF and the determined process parameters PP. The future process parameters are a prediction and/or simulation of the process parameters in a predetermined time window that lies in the future. The process model of the optimizer unit 50 preferably uses the determined process parameters PP and the future emitter output data DOF to determine the future process parameters, in particular based on different compressor unit set-points SC and/or valve set-points SV. In other words, the process model provides simulations for the optimizer unit 50 that predict how based on different scenarios of compressor unit set-points SC and valve set-points SV, the process parameters PP will change. Consequently, the optimizer unit 50 can evaluate, based on the determined future process parameters, which set-points yield a most optimal carbon sequestration, in particular in view of general transportation cost, energy consumption of the sequestration and maximization of the storage capacity of the reservoir 20 and/or the wells. This optimizer unit 50 preferably considers additional factors in the optimization process. For example, the process parameters PP should all apply to provided security constraints. Furthermore, based on the process parameters PP, in particular fluid pressure and fluid temperature, a physical state of the process fluid 11 might change during transportation. A change of physical state of the process fluid 11 usually leads to an increase in energy consumption and as such costs. Thus, phase change margins that relate to physical boundaries of the process parameters PP in view of a change of physical state of the process fluid 11 might be provided to the optimizer unit 50. Thus, the optimizer unit 50 will most likely determine optimized control set-points S that will not lead to a change of physical state of the process fluid 11 during transportation from the emitters 10 to the reservoir 20.

The system 100 further comprises a reservoir model unit 60 that is configured to provide a reservoir model of the reservoir 20 and/or the wells. The reservoir model 60 provides reservoir data DR based on the future emitter output data DOF and/or the future process parameters. Thus, the optimizer unit 50 can determined the optimized control set-points S using the reservoir data DR.

In order to evaluate the costs of the carbon sequestration, the optimizer unit 50 is provided with energy cost data DE from an external data source 90, for example a cloud environment. The energy cost data DE preferably comprise future energy costs. In other words, the energy cost data DE reflect predicted energy costs in a future predetermined time frame of carbon sequestration. Consequently, the optimizer unit 50 is configured to determine the optimized control set-points S using the energy costs data DE.

Fig.2 shows a schematic view of an optimizer unit 50.

The optimizer unit 50 comprises an emitter analysis unit 51 and a set-point analysis unit 52. The emitter analysis unit 51 is provided with emitter output data DO and scenario data DS in order to provide future emitter output data DOF. The future emitter output data DOF is provided to the set-point analysis unit 52. The set-point analysis unit 52 is also supplied with process parameters PP, phase change margins M, reservoir data DR, energy cost data DE and safety parameters PS. The set-point analysis unit 52 is configured to provide optimized control set-points S based on all the available inputs.

Fig.3 shows a schematic view of a method for controlling carbon sequestration comprising the follow steps: Outputting S10, by at least one emitter 10, a process fluid 11 that is to be captured. Receiving and storing S20, by at least one reservoir 20, being connected over a pipeline 70 with the at least one emitter 10, the process fluid 11, Controlling S30, by at least one compressor unit 30, being disposed at the pipeline 70 between the at least one emitter 10 and the at least one reservoir 20, a downstream pressure of the process fluid 11. Controlling S40, by at least one valve 40, being disposed at the pipeline 70 between the at least one emitter 10 and the at least one reservoir 20, a flow of the process fluid 11 from the at least one emitter 10 to the at least one reservoir 20. Determining S50, by an optimizer unit 50, emitter output data DO by continuously logging emitter output levels of the of at least one emitter 10, wherein the emitter output levels relate to an amount of process fluid 11. Determining S60, by the optimizer unit 50, future emitter output data DOF using the determined emitter output data DO, wherein the future emitter output data DOF relate to a prediction of emitter outputs in a predetermined time window;. Determining S70, by the optimizer unit 50, optimized control set-points S for controlling the transport of the process fluid 11 using the determined future emitter output data DOF. The optimized control set-points S comprise compressor unit set-points DC and valve set-points SV, wherein the compressor unit set-points SC are used for controlling the at least one compressor unit 30, wherein the valve set-points SV are used for controlling the at least one valve 40.

### List of reference symbols

- 100: system
- 10: emitter
- 11: process fluid
- 20: reservoir
- 30: compressor unit
- 40: valve
- 50: optimizer unit
- 51: emitter analysis unit
- 52: set-point analysis unit
- 60: reservoir model unit
- 70: pipeline
- 80: parameter sensor
- 90: external data source
- SO: optimized control set-points
- SC: compressor unit set-point
- SV: valve set-point
- DO: emitter output data
- DOF: future emitter output data
- PP: process parameters
- M: phase change margins
- DR: reservoir data
- DE: energy cost data
- PS: safety parameters
- DS: scenario data

## Claims

1. System (100) for controlling carbon sequestration, comprising:
at least one emitter (10), being configured to output a process fluid (11) comprising carbon dioxide that is to be sequestrated;
at least one reservoir (20), being connected over a pipeline (70) with the at least one emitter (10) and being configured to receive and store the process fluid (11);
at least one compressor unit (30), being disposed at the pipeline (70) between the at least one emitter (10) and the at least one reservoir (20) and being configured to control a downstream pressure of the process fluid (11);
at least one valve (40), being disposed at the pipeline (70) between the at least one emitter (10) and the at least one reservoir (20) and being configured to control a flow of the process fluid (11) from the at least one emitter (10) to the at least one reservoir (20);
an optimizer unit (50), being configured to determine emitter output data (DO) by continuously logging emitter output levels of the process fluid (11) of the of at least one emitter (10), wherein the emitter output levels relate to an amount of process fluid (11);
being configured to determine future emitter output data (DOF) using the determined emitter output data (DO), wherein the future emitter output data (DOF) relate to a prediction of emitter outputs in a predetermined time window;
being configured to determine optimized control set-points (S) for controlling the sequestration of the process fluid (11) using the determined future emitter output data (DOF);
wherein the optimized control set-points (S) comprise compressor unit set-points (SC) and valve set-points (SV), wherein the compressor unit set-points (SC) are used for controlling the at least one compressor unit (30), wherein the valve set-points (SV) are used for controlling the at least one valve (40);
**characterized in that** the system comprises a reservoir model unit (60), being configured to provide a reservoir model of the at least one reservoir (20) and being configured to determine reservoir data (DR) using the reservoir model and the determined future emitter output data (DOF), wherein the reservoir data (DR) relates to properties of the at least one reservoir (20) when receiving the process fluid according to the future emitter output data (DOF);
wherein the optimizer unit (50) is configured to determine the optimized control set-points (S) using the determined reservoir data (DR).

2. System of claim 1, comprising:
at least one process parameter sensor (80), configured to determine process parameters (PP) of the process fluid (11);
wherein the optimizer unit (50) is configured to determining future process parameters using the determined future emitter output data (DOF) and the determined process parameters (PP), wherein the future process parameters relate to a prediction of the process parameters in a predetermined time window; and
configured to determine the optimized control set-points (S) using the determined future process parameters.

3. System of claim 2,
wherein the process parameters (PP) comprise a fluid pressure, a fluid temperature, a composition and/or a fluid flow.

4. System of any one of the claims 2-3,
wherein the optimizer unit (50) is configured receive phase change margins (M) of the process fluid (11), relating to physical boundaries of the process parameters (PP) of the process fluid (11) in view of a change of physical state of the process fluid (11);
wherein the optimizer unit (50) is configured to determined the optimized control set-points (S) using the received phase change margins (M).

5. System of any one of the claims 2-4,
wherein the at least one process parameter sensor (80) is disposed on the at least one compressor unit (30) and/or the at least one reservoir (20).

6. System of any one of the preceding claims,
wherein the optimizer unit (50) is configured to receive scenario data (DS), relating to general information about the carbon sequestration;
wherein the optimizer unit (50) is configured to determine the future emitter output data (DOF) using the scenario data (DS).

7. System of any one of the preceding claims, comprising:
a plurality of compressor units (30), wherein the optimizer unit (50) is configured to balance a workload of the plurality of compressor units (30) between each other when determining the optimized control set-points (S).

8. System of any one of the preceding claims, comprising:
comprising a plurality of reservoirs (20), wherein the optimizer unit (50) is configured to balance a receiving load of the process fluid (11) between the plurality of reservoirs (20) when determining the optimized control set-points (S).

9. System of any one of the preceding claims, comprising:
wherein the at least on reservoir (20) comprises at a plurality of injection wells that are used to inject the process fluid (11) from the at least one emitter (10) into the at least one reservoir (20), wherein the optimizer unit (50) is configured to balance a receiving load of the process fluid (11) between the plurality of injection wells when determining the optimized control set-points (S).

10. System of any one of the preceding claims,
wherein the optimizer unit (50) is configured to receive energy cost data (DE); and wherein the optimizer unit (50) is configured to determine the optimized control set-points (S) using the received energy cost data (DE).

11. System of any one of the preceding claims,
wherein the optimizer unit (50) is configured to receive safety parameters (PS); and wherein the optimizer unit (50) is configured to determine the optimized control set-points (S) using the received safety parameters (PS).

12. System of any one of the preceding claims, comprising:
a temperature regulating device, which is configured to externally regulate a temperature of the process fluid;
wherein the optimizer unit (50) is configured to determine a temperature control signal when determining the optimized control set-points (S);
wherein the temperature regulating device is configured to regulate the temperature of the process fluid using the temperature control signal.

13. System of any one of the preceding claims,
wherein the optimizer unit comprises a machine learning unit.

14. Method for controlling process fluid sequestration, comprising the steps;
outputting (S10), by at least one emitter (10), a process fluid (11) that is to be captured;
receiving and storing (S20), by at least one reservoir (20), being connected over a pipeline (70) with the at least one emitter (10), the process fluid (11);
controlling (S30), by at least one compressor unit (30), being disposed at the pipeline (70) between the at least one emitter (10) and the at least one reservoir (20), a downstream pressure of the process fluid (11);
controlling (S40), by at least one valve (40), being disposed at the pipeline (70) between the at least one emitter (10) and the at least one reservoir (20), a flow of the process fluid (11) from the at least one emitter (10) to the at least one reservoir (20);
determining (S50), by an optimizer unit (50), emitter output data (DO) by continuously logging emitter output levels of the of at least one emitter (10), wherein the emitter output levels relate to an amount of process fluid (11);
determining (S60), by the optimizer unit (50), future emitter output data (DOF) using the determined emitter output data (DO), wherein the future emitter output data (DOF) relate to a prediction of emitter outputs in a predetermined time window;
determining (S70), by the optimizer unit (50), optimized control set-points (S) for controlling the transport of the process fluid (11) using the determined future emitter output data (DOF);
wherein the optimized control set-points (S) comprise compressor unit set-points (DC) and valve set-points (SV), wherein the compressor unit set-points (SC) are used for controlling the at least one compressor unit (30), wherein the valve set-points (SV) are used for controlling the at least one valve (40).
**characterized by** providing, by a reservoir model unit (60), a reservoir model of the at least one reservoir (20) and determining by the reservoir model unit (60),
reservoir data (DR) using the reservoir model and the determined future emitter output data (DOF), wherein the reservoir data (DR) relates to properties of the at least one reservoir (20) when receiving the process fluid according to the future emitter output data (DOF);
wherein determining (S70), by the optimizer unit (50), optimized control set-points (S) comprises using the determined reservoir data (DR).

## Patentansprüche

1. System (100) zur Steuerung der Kohlenstoffsequestrierung, umfassend:
mindestens einen Emitter (10), der derart eingerichtet ist, dass er ein Prozessfluid (11) ausgibt, das Kohlendioxid umfasst, das sequestriert werden soll;
mindestens ein Reservoir (20), das über eine Rohrleitung (70) mit dem mindestens einen Emitter (10) verbunden ist und derart eingerichtet ist, dass es das Prozessfluid (11) aufnimmt und speichert;
mindestens eine Kompressoreinheit (30), die an der Rohrleitung (70) zwischen dem mindestens einen Emitter (10) und dem mindestens einen Reservoir (20) angeordnet ist und derart eingerichtet ist, dass sie einen stromabwärtigen Druck des Prozessfluids (11) steuert;
mindestens ein Ventil (40), das an der Rohrleitung (70) zwischen dem mindestens einen Emitter (10) und dem mindestens einen Reservoir (20) angeordnet ist und derart eingerichtet ist, dass es einen Fluss des Prozessfluids (11) von dem mindestens einen Emitter (10) zu dem mindestens einen Reservoir (20) steuert
eine Optimierungseinheit (50), die eingerichtet ist, um Emitterausgangsdaten (DO) durch kontinuierliches Aufzeichnen von Emitterausgangsniveaus des Prozessfluids (11) des mindestens einen Emitters (10) zu bestimmen, wobei sich die Emitterausgangsniveaus auf eine Menge des Prozessfluids (11) beziehen;
eingerichtet ist, um zukünftige Emitterausgangsdaten (DOF) unter Verwendung der bestimmten Emitterausgangsdaten (DO) zu bestimmen, wobei sich die zukünftigen Emitterausgangsdaten (DOF) auf eine Vorhersage von Emitterausgängen in einem vorbestimmten Zeitfenster beziehen;
eingerichtet ist, um optimierte Steuersollwerte (S) zum Steuern der Sequestration des Prozessfluids (11) unter Verwendung der bestimmten zukünftigen Emitterausgangsdaten (DOF) zu bestimmen;
wobei die optimierten Steuersollwerte (S) Kompressoreinheitssollwerte (SC) und Ventilsollwerte (SV) umfassen, wobei die Kompressoreinheitssollwerte (SC) zum Steuern der mindestens einen Kompressoreinheit (30) verwendet werden, wobei die Ventilsollwerte (SV) zum Steuern des mindestens einen Ventils (40) verwendet werden;
**dadurch gekennzeichnet, dass** das System eine Reservoirmodelleinheit (60) umfasst, die derart eingerichtet ist, dass sie ein Reservoirmodell des mindestens einen Reservoirs (20) bereitstellt und derart eingerichtet ist, dass sie Reservoirdaten (DR) unter Verwendung des Reservoirmodells und der bestimmten zukünftigen Emitterausgangsdaten (DOF) bestimmt, wobei sich die Reservoirdaten (DR) auf Eigenschaften des mindestens einen Reservoirs (20) beziehen, wenn das Prozessfluid gemäß den zukünftigen Emitterausgangsdaten (DOF) empfangen wird;
wobei die Optimierungseinheit (50) eingerichtet ist, dass sie die optimierten Steuersollwerte (S) unter Verwendung der bestimmten Reservoirdaten (DR) bestimmt.

2. System nach Anspruch 1, das Folgendes umfasst:
mindestens einen Prozessparametersensor (80), der eingerichtet ist, dass er Prozessparameter (PP) des Prozessfluids (11) bestimmt;
wobei die Optimierungseinheit (50) eingerichtet ist, dass sie zukünftige Prozessparameter unter Verwendung der bestimmten zukünftigen Emitterausgangsdaten (DOF) und der bestimmten Prozessparameter (PP) bestimmt, wobei sich die zukünftigen Prozessparameter auf eine Vorhersage der Prozessparameter in einem vorbestimmten Zeitfenster beziehen; und
eingerichtet ist, dass sie die optimierten Steuersollwerte (S) unter Verwendung der bestimmten zukünftigen Prozessparameter bestimmt.

3. System nach Anspruch 2,
wobei die Prozessparameter (PP) einen Fluiddruck, eine Fluidtemperatur, eine Zusammensetzung und/oder einen Fluidstrom umfassen.

4. System nach einem der Ansprüche 2-3,
wobei die Optimierungseinheit (50) eingerichtet ist, dass sie Phasenänderungsspannen (M) des Prozessfluids (11) empfängt, die sich auf physikalische Grenzen der Prozessparameter (PP) des Prozessfluids (11) im Hinblick auf eine Änderung des physikalischen Zustands des Prozessfluids (11) beziehen;
wobei die Optimierungseinheit (50) eingerichtet ist, dass sie die optimierten Steuersollwerte (S) unter Verwendung der empfangenen Phasenänderungsspannen (M) bestimmt.

5. System nach einem der Ansprüche 2 bis 4,
wobei der mindestens eine Prozessparametersensor (80) an der mindestens einen Kompressoreinheit (30) und/oder dem mindestens einen Reservoir (20) angeordnet ist.

6. System nach einem der vorhergehenden Ansprüche,
wobei die Optimierungseinheit (50) derart eingerichtet ist, dass sie Szenariodaten (DS) empfängt, die sich auf allgemeine Informationen über die Kohlenstoffsequestrierung beziehen;
wobei die Optimierungseinheit (50) derart eingerichtet ist, dass sie die zukünftigen Emittentenausgangsdaten (DOF) unter Verwendung der Szenariodaten (DS) bestimmt.

7. System nach einem der vorhergehenden Ansprüche, umfassend:
eine Vielzahl von Kompressoreinheiten (30), wobei die Optimierungseinheit (50) derart eingerichtet ist, dass sie eine Arbeitslast der Vielzahl von Kompressoreinheiten (30) untereinander ausgleicht, wenn sie die optimierten Regelungs-Sollwerte (S) bestimmt.

8. System nach einem der vorhergehenden Ansprüche, umfassend:
umfassend eine Vielzahl von Reservoirs (20), wobei die Optimierungseinheit (50) eingerichtet ist, um eine Empfangslast des Prozessfluids (11) zwischen der Vielzahl von Reservoirs (20) auszugleichen, wenn die optimierten Regelungs-Sollwerte (S) bestimmt werden.

9. System nach einem der vorhergehenden Ansprüche, umfassend:
wobei das mindestens eine Reservoir (20) eine Vielzahl von Injektionsbohrungen umfasst, die verwendet werden, um das Prozessfluid (11) von dem mindestens einen Emitter (10) in das mindestens eine Reservoir (20) zu injizieren, wobei die Optimierungseinheit (50) derart eingerichtet ist, dass sie eine Aufnahmelast des Prozessfluids (11) zwischen der Vielzahl von Injektionsbohrungen ausgleicht, wenn sie die optimierten Steuersollwerte (S) bestimmt.

10. System nach einem der vorhergehenden Ansprüche,
wobei die Optimierungseinheit (50) derart eingerichtet ist, dass sie Energiekostendaten (DE) empfängt; und wobei die Optimierungseinheit (50) derart eingerichtet ist, dass sie die optimierten Regelungs-Sollwerte (S) unter Verwendung der empfangenen Energiekostendaten (DE) bestimmt.

11. System nach einem der vorhergehenden Ansprüche,
wobei die Optimierungseinheit (50) derart eingerichtet ist, dass sie Sicherheitsparameter (PS) empfängt; und wobei die Optimierungseinheit (50) derart eingerichtet ist, dass sie die optimierten Regelungs-Sollwerte (S) unter Verwendung der empfangenen Sicherheitsparameter (PS) bestimmt.

12. System nach einem der vorhergehenden Ansprüche, umfassend:
eine Temperaturregelungsvorrichtung, die derart eingerichtet ist, dass sie eine Temperatur des Prozessfluids extern regelt;
wobei die Optimierungseinheit (50) derart eingerichtet ist, dass sie ein Temperaturregelungssignal bestimmt, wenn sie die optimierten Regelungssollwerte (S) bestimmt;
wobei die Temperaturregelungsvorrichtung derart eingerichtet ist, dass sie die Temperatur des Prozessfluids unter Verwendung des Temperaturregelungssignals regelt.

13. System nach einem der vorhergehenden Ansprüche,
wobei die Optimierungseinheit eine maschinelle Lerneinheit umfasst.

14. Verfahren zur Steuerung der Sequestrierung von Prozessfluid, umfassend die Schritte:
Ausgeben (S10) eines aufzufangenden Prozessfluids (11) durch mindestens einen Emitter (10);
Aufnehmen und Speichern (S20) des Prozessfluids (11) durch mindestens ein Reservoir (20), das über eine Rohrleitung (70) mit dem mindestens einen Emitter (10) verbunden ist;
Steuern (S30) eines stromabwärtigen Drucks des Prozessfluids (11) durch mindestens eine Kompressoreinheit (30), die an der Rohrleitung (70) zwischen dem mindestens einen Emitter (10) und dem mindestens einen Reservoir (20) angeordnet ist;
Steuern (S40), durch mindestens ein Ventil (40), das an der Rohrleitung (70) zwischen dem mindestens einen Emitter (10) und dem mindestens einen Behälter (20) angeordnet ist, eines Flusses des Prozessfluids (11) von dem mindestens einen Emitter (10) zu dem mindestens einen Behälter (20);
Bestimmen (S50), durch eine Optimierungseinheit (50), von Emitterausgangsdaten (DO) durch kontinuierliches Aufzeichnen von Emitterausgangsniveaus des mindestens einen Emitters (10), wobei sich die Emitterausgangsniveaus auf eine Menge von Prozessfluid (11) beziehen;
Bestimmen (S60), durch die Optimierungseinheit (50), von zukünftigen Emitterausgangsdaten (DOF) unter Verwendung der bestimmten Emitterausgangsdaten (DO), wobei sich die zukünftigen Emitterausgangsdaten (DOF) auf eine Vorhersage von Emitterausgängen in einem vorbestimmten Zeitfenster beziehen;
Bestimmen (S70), durch die Optimierungseinheit (50), optimierter Steuersollwerte (S) zum Steuern des Transports des Prozessfluids (11) unter Verwendung der bestimmten zukünftigen Emitterausgangsdaten (DOF);
wobei die optimierten Steuersollwerte (S) Kompressoreinheitssollwerte (DC) und Ventilsollwerte (SV) umfassen, wobei die Kompressoreinheitssollwerte (SC) zum Steuern der mindestens einen Kompressoreinheit (30) verwendet werden, wobei die Ventilsollwerte (SV) zum Steuern des mindestens einen Ventils (40) verwendet werden.
**dadurch gekennzeichnet, dass** durch eine Reservoirmodelleinheit (60) ein Reservoirmodell des mindestens einen Reservoirs (20) bereitgestellt wird und durch die Reservoirmodelleinheit (60) Reservoirdaten (DR) unter Verwendung des Reservoirmodells und der bestimmten zukünftigen Emitterausgangsdaten (DOF) bestimmt werden, wobei sich die Reservoirdaten (DR) auf Eigenschaften des mindestens einen Reservoirs (20) beziehen, wenn das Prozessfluid gemäß den zukünftigen Emitterausgangsdaten (DOF) empfangen wird;
wobei das Bestimmen (S70) optimierter Steuersollwerte (S) durch die Optimierungseinheit (50) die Verwendung der bestimmten Reservoirdaten (DR) umfasst.

## Revendications

1. Système (100) de contrôle de la séquestration du carbone, comprenant :
au moins un émetteur (10), configuré pour émettre un fluide de traitement (11) comprenant du dioxyde de carbone qui doit être séquestré ;
au moins un réservoir (20), relié par un pipeline (70) à l'au moins un émetteur (10) et configuré pour recevoir et stocker le fluide de traitement (11) ;
au moins une unité de compression (30), disposée au niveau du pipeline (70) entre l'au moins un émetteur (10) et l'au moins un réservoir (20) et configurée pour contrôler une pression aval du fluide de traitement (11) ;
au moins une soupape (40), disposée au niveau du pipeline (70) entre l'au moins un émetteur (10) et l'au moins un réservoir (20) et configurée pour contrôler un débit du fluide de traitement (11) de l'au moins un émetteur (10) à l'au moins un réservoir (20) ;
une unité d'optimisation (50), configurée pour déterminer des données de sortie d'émetteur (DO) en enregistrant en continu les niveaux de sortie d'émetteur du fluide de traitement (11) de l'au moins un émetteur (10), les niveaux de sortie d'émetteur étant liés à une quantité de fluide de traitement (11) ;
configurée pour déterminer des données de sortie d'émetteur futures (DOF) en utilisant les données de sortie d'émetteur déterminées (DO), les données de sortie d'émetteur futures (DOF) se rapportant à une prédiction de sorties d'émetteur dans une fenêtre temporelle prédéterminée ;
configurée pour déterminer des points de consigne de contrôle optimisés (S) pour contrôler la séquestration du fluide de traitement (11) à l'aide des données de sortie d'émetteur futures déterminées (DOF) ;
les points de consigne de contrôle optimisés (S) comprenant des points de consigne d'unité de compression (SC) et des points de consigne de soupape (SV), les points de consigne d'unité de compression (SC) étant utilisés pour contrôler l'au moins une unité de compression (30), les points de consigne de soupape (SV) étant utilisés pour contrôler l'au moins une soupape (40) ;
**caractérisé en ce que** le système comprend une unité de modèle de réservoir (60), configurée pour fournir un modèle de réservoir de l'au moins un réservoir (20) et configurée pour déterminer les données de réservoir (DR) à l'aide du modèle de réservoir et des données de sortie d'émetteur futures déterminées (DOF), les données de réservoir (DR) se rapportant aux propriétés de l'au moins un réservoir (20) lorsqu'il reçoit le fluide de traitement conformément aux données de sortie d'émetteur futures (DOF) ;
l'unité d'optimisation (50) étant configurée pour déterminer les points de consigne de contrôle optimisés (S) à l'aide des données de réservoir déterminées (DR).

2. Système selon la revendication 1, comprenant :
au moins un capteur de paramètres de traitement (80), configuré pour déterminer des paramètres de traitement (PP) du fluide de traitement (11) ;
l'unité d'optimisation (50) étant configurée pour déterminer des futurs paramètres de traitement à l'aide des données de sortie d'émetteur futures déterminées (DOF) et des paramètres de traitement déterminés (PP), les futurs paramètres de traitement se rapportant à une prédiction des paramètres de traitement dans une fenêtre temporelle prédéterminée ; et
configuré pour déterminer les points de consigne de contrôle optimisés (S) à l'aide des futurs paramètres de traitement déterminés.

3. Système selon la revendication 2,
les paramètres de traitement (PP) comprenant une pression de fluide, une température de fluide, une composition et/ou un débit de fluide.

4. Système selon l'une quelconque des revendications 2 et 3,
l'unité d'optimisation (50) étant configurée pour recevoir des marges de changement de phase (M) du fluide de traitement (11), relatives aux limites physiques des paramètres de traitement (PP) du fluide de traitement (11) en vue d'un changement d'état physique du fluide de traitement (11) ;
l'unité d'optimisation (50) étant configurée pour déterminer les points de consigne de contrôle optimisés (S) à l'aide des marges de changement de phase (M) reçues.

5. Système selon l'une quelconque des revendications 2 et 4,
l'au moins un capteur de paramètres de traitement (80) étant disposé sur l'au moins une unité de compression (30) et/ou l'au moins un réservoir (20).

6. Système selon l'une quelconque des revendications précédentes,
l'unité d'optimisation (50) étant configurée pour recevoir des données de scénario (DS), relatives à des informations générales sur la séquestration du carbone ;
l'unité d'optimisation (50) étant configurée pour déterminer les futures données de sortie d'émetteur (DOF) à l'aide des données de scénario (DS).

7. Système selon l'une quelconque des revendications précédentes, comprenant :
une pluralité d'unités de compression (30), l'unité d'optimisation (50) étant configurée pour équilibrer une charge de travail de la pluralité d'unités de compression (30) entre elles lors de la détermination des points de consigne de contrôle optimisés (S).

8. Système selon l'une quelconque des revendications précédentes, comprenant :
comprenant une pluralité de réservoirs (20), l'unité d'optimisation (50) étant configurée pour équilibrer une charge de réception du fluide de traitement (11) entre la pluralité de réservoirs (20) lors de la détermination des points de consigne de contrôle optimisés (S).

9. Système selon l'une quelconque des revendications précédentes, comprenant :
l'au moins un réservoir (20) comprenant au niveau d'une pluralité de puits d'injection qui sont utilisés pour injecter le fluide de traitement (11) à partir de l'au moins un émetteur (10) dans l'au moins un réservoir (20), l'unité d'optimisation (50) étant configurée pour équilibrer une charge de réception du fluide de traitement (11) entre la pluralité de puits d'injection lors de la détermination des points de consigne de contrôle optimisés (S).

10. Système selon l'une quelconque des revendications précédentes,
l'unité d'optimisation (50) étant configurée pour recevoir des données de coût énergétique (DE) ; et l'unité d'optimisation (50) étant configurée pour déterminer les points de consigne de contrôle optimisés (S) en utilisant les données de coût énergétique reçues (DE).

11. Système selon l'une quelconque des revendications précédentes,
l'unité d'optimisation (50) étant configurée pour recevoir des paramètres de sécurité (PS) ; et l'unité d'optimisation (50) étant configurée pour déterminer les points de consigne de contrôle optimisés (S) en utilisant les paramètres de sécurité reçus (PS).

12. Système selon l'une quelconque des revendications précédentes, comprenant :
un dispositif de régulation de la température, qui est configuré pour réguler de manière externe une température du fluide de traitement ;
l'unité d'optimisation (50) étant configurée pour déterminer un signal de contrôle de la température lors de la détermination des points de consigne de contrôle optimisés (S) ;
le dispositif de régulation de la température étant configuré pour réguler la température du fluide de traitement à l'aide du signal de contrôle de la température.

13. Système selon l'une quelconque des revendications précédentes,
l'unité d'optimisation comprenant une unité d'apprentissage automatique.

14. Procédé de contrôle de la séquestration de fluide de traitement, comprenant les étapes suivantes :
l'émission (S10), par au moins un émetteur (10), d'un fluide de traitement (11) qui doit être capturé ;
la réception et le stockage (S20), par au moins un réservoir (20) relié par un pipeline (70) à l'au moins un émetteur (10), du fluide de traitement (11) ;
le contrôle (S30), par au moins une unité de compression (30), disposée au niveau du pipeline (70) entre l'au moins un émetteur (10) et l'au moins un réservoir (20), d'une pression aval du fluide de traitement (11) ;
le contrôle (S40), par au moins une soupape (40), disposée au niveau du pipeline (70) entre l'au moins un émetteur (10) et l'au moins un réservoir (20), d'un débit du fluide de traitement (11) de l'au moins un émetteur (10) vers l'au moins un réservoir (20) ;
la détermination (S50), par une unité d'optimisation (50), de données de sortie d'émetteur (DO) en enregistrant en continu des niveaux de sortie d'émetteur de l'au moins un émetteur (10), les niveaux de sortie d'émetteur se rapportant à une quantité de fluide de traitement (11) ;
la détermination (S60), par l'unité d'optimisation (50), des futures données de sortie d'émetteur (DOF) en utilisant les données de sortie d'émetteur déterminées (DO), les futures données de sortie d'émetteur (DOF) se rapportant à une prédiction de sorties d'émetteur dans une fenêtre temporelle prédéterminée ;
la détermination (S70), par l'unité d'optimisation (50), de points de consigne de contrôle optimisés (S) pour contrôler le transport du fluide de traitement (11) à l'aide des données de sortie d'émetteur futures déterminées (DOF) ;
les points de consigne de contrôle optimisés (S) comprenant des points de consigne d'unité de compression (DC) et des points de consigne de soupape (SV), les points de consigne d'unité de compression (SC) étant utilisés pour contrôler l'au moins une unité de compression (30), les points de consigne de soupape (SV) étant utilisés pour contrôler l'au moins une soupape (40).
**caractérisé par** la fourniture, par une unité de modèle de réservoir (60), d'un modèle de réservoir de l'au moins un réservoir (20) et la détermination, par l'unité de modèle de réservoir (60), de données de réservoir (DR) à l'aide du modèle de réservoir et des données de sortie d'émetteur futures déterminées (DOF), les données de réservoir (DR) se rapportant aux propriétés de l'au moins un réservoir (20) lorsqu'il reçoit le fluide de traitement conformément aux données de sortie d'émetteur futures (DOF) ;
la détermination (S70), par l'unité d'optimisation (50), de points de consigne de contrôle optimisés (S) comprenant l'utilisation des données de réservoir déterminées (DR).
